# EUROPEAN PATENT APPLICATION

(11) **EP 2 735 888 A2**
(43) Date of publication of application: **28.05.2014**
(21) Application number: 13193393.9
(22) Date of filing: 18.11.2013
(51) Int. Cl.: G01T 1/20

(54) **X-ray imaging detector, method for manufacturing a photosensitive element and an x-ray imaging detector**

(30) Priority: 21.11.2012 EA 201201501
(71) Applicant: Zakrytoe Akcionernoe Obshchestvo "Impul's", St.Petersburg 197343 (RU)
(72) Inventor: Reboni, Voldemar Osvaldovich, 195253 Saint Petersburg (RU); Krauze, Vladimir Borisovich, 197343 Saint Petersburg (RU)
(74) Representative: Spengler, Robert

(57) **Abstract**

The invention relates to the area of X-ray engineering, medical diagnostic and nondestructive methods of testing which deal with x-ray visualization and image acquisition and, can be used for x-ray flat panel imaging detectors.
The detector (1) includes a sensor array of photosensitive elements (2) arranged on a common substrate (3). Increase of the detector design manufacturability, provision of photosensitive surface flatness is achieved by production of the detector (1) in which the assembly of each photosensitive element (2) is performed in calibration device (8) comprising an easy-to-remove assembly for setting the given element thickness (11). Each photosensitive element (2) is an assembly unit comprising a photosensitive plate (4) and a substrate (5) wherein an elastically deformed interlayer (7) is arranged and fixed between them by means of adhesive (6).

The photosensitive elements (2) are mounted on the common substrate (3) with the possibility to be replaced without disturbances of the photosensitive surface flatness.

## Description

### Field of the invention

The invention relates to the area of X-ray engineering, medical diagnostic and nondestructive methods of testing which deal with x-ray visualization and image acquisition and, can be used for x-ray flat panel imaging detectors.

### Previous state of art

While examining an object with x-rays they pass through the object and then are captured behind the object by a flat panel detector. An x-ray flat panel detector is a multilayer structure consists of as a main element a scintillation layer used to convert incident radiation into visible light and being optically coupled with scintillator, photosensitive array.

The photosensitive array includes photosensitive sensors arranged on a common substrate and serves to convert visible light into electrical signal.

Such compound detectors suffer for resolution- and sensitivity reduction as well as artifacts appeared in images due to nonflatness of photosensitive surface. Nonflatness may appear as a result of variation in the thickness within the photosensitive array. Each photosensitive sensor as well as the detector represents a multilayer structure comprising a substrate with a photosensitive plate with adhesive sandwiched between. Variation in the photosensitive sensor's thickness may for example, occur because of variation in the thickness of substrates involved, photosensitive plates and glue layer as well as of substrate's and photosensitive plates' geometrical nonuniformity which may have such shape disadvantages as rippling and roughness.

From the state of art are known some technical solutions aimed at removing nonflatness of photosensitive array surface. For example, it is known a solution presented in the WO Patent Nº 2010058335 «ASSEMBLY METHOD FOR A TILED RADIATION DETECTOR». According to this solution a detector involves a photosensitive sensor array arranged on a common substrate. There is a layer of glue that fixes array's sensors on the substrate. To remove the variation in array's sensors thickness and to solve the photosensitive surface nonflatness trouble they polish the sensor's backside. Such a solution in the author's judgment provides removing of the variation in array's sensors thickness and thus, generating photosensitive sensor surface with the high level of flatness. But according to fabrication method grinding is undesirable because of small dimensions of elements it turns out to be a difficult procedure that reduces strength and may lead to element damage; besides, while producing detector using the claimed method some supplementary procedures to test elements' workability after grinding are required.

For example, according to the US Patent Nº 6352875 an x-ray imaging detector and a method for its production is known. The x-ray imaging detector comprises a photosensitive sensor array wherein each sensor consists of a photosensitive plate and a substrate. Photosensitive sensors are arranged on a common substrate with adhesive sandwiched between generating a common photosensitive array surface. In the detector the substrates of adjacent photosensitive elements having different thicknesses are smoothed out by means of varied adhesive layer thickness so that photosensitive surface involving all elements had the same level and generated practically ideal matrix surface.

In invention's authors judgment the detector design does not comprise any level difference of adjacent photosensitive elements that results in a possibility to provide the high degree of flatness of the overall photosensitive surface and, thus to solve the problem of resolution reduction and detector's sensitivity. However, in the invention is not considered the fact that either photosensitive plates or substrates may have thickness and shape different from the reference ones; as a result there can not be generated a flat matrix out of such elements. Specifics of the design and method is the usage of at least two types of adhesives having different features, composition and manner of deposition. These facts provide extra difficulties while detector production.

The said methods and devices lack of manufacturability, since detectors are difficult to produce there is no guarantees that level difference will be eliminated and surface flatness requirements observed. Besides, during detector manufacturing there is no possibility to replace some failed elements as all elements are coupled on a common substrate with an adhesive layer that covers the whole substrate surface. Such a connection does not allow replacing a failed element and with a simultaneously fulfilled requirement for flatness of the overall photosensitive array surface.

### Disclosure of the invention

The present technical solution aims at developing x-ray imaging detector design, method of detector photosensitive element producing and method of detector manufacturing that provide high image quality acquisition and complete technical result:
- increase of detector design manufacturability;
- providing photosensitive array surface flatness by elimination of level difference in the elements composing the said photosensitive array;
- essential reduce of voids and air bubbles in adhesive layer;
- provision of elements' interchangeability without violation of its photosensitive surface flatness.

In order to achieve assigned task considering the said technical result the x-ray imaging detector comprises a photosensitive sensor array arranged on a common substrate where each element of the said sensor array consists of a photosensitive plate and an appropriate substrate. Between the photosensitive plate and appropriate substrate there is an elastically deformed and fixed with adhesive interlayer providing a given thickness of the photosensitive element and formation of high degree flatness photosensitive surface.

Each element mounted on the common substrate can be replaced - without the said flatness violation - by means of fastening performed on the common substrate.

Elastically deformed interlayer providing a given thickness of the photosensitive element allows making equal height photosensitive elements, which being mounted on the common substrate form a sensor array of high degree flatness photosensitive surface. Besides, the interlayer provides considerable simplifying a manufacturing procedure of this elements and thus of the detector's.

Fastening of each photosensitive element on the common substrate with a possibility of replacing provides their interchangeability and thus, prolongation of detector's lifespan. Wherein such replacement does not violate photosensitive surface flatness.

Supplementary variants of device's embodiment are possible. They are reasonable to comprise:
- elastically deformed interlayer made out of brass, copper or steel micron-scale wire mesh. However, preferred material is stainless steel since the said wire mesh may oxidize getting in touch with adhesive. Wire mesh dimensions are equal to those of a photosensitive element. A key feature of the wire mesh is its possibility to make even as well as to bind adhesive layers applied to the substrate and plate surfaces. Adhesive layers are known not to be perfect homogeneous and to include such impurities as voids and air bubbles which cause different artifacts in images. Wherein, adhesive layer applied to the substrate and plate surfaces has on its untouchable to the substrate and plate surfaces some surface imperfections, that at usual adhesion of the substrate and plate without a wire mesh will result in additional voids and hardenings and extrusion of superfluous adhesive. The wire mesh having micron-scale cell structure provides interpenetration of adhesive layers being considered a reinforcing part, providing their more rigid coupling with each other. The wire mesh provides structuring, far greater degree of adhesive homogeneity by means of voids number reduction, more rigid coupling of adhesive layers with each other and more homogeneous distributing of adhesive layer between the plate and substrate of photosensitive element. The wire mesh application provides increase of electroconductivity and heat-conducting features of adhesive layer preventing static charge on the element sensitive surface;
- photosensitive element thickness was provided by placing in a calibration device, performed, for instance, as a cored circular cylinder of a reference height that defines this element thickness;
- the fastening tool was performed as an opening filled at least partly with adhesive. This type of fastening solves two interrelated tasks: firstly, it provides a single replacement of a failed element without sensor array violation; secondly, it does not disturb flatness of sensor array surface. To perform a sensor array with flatness of high degree it is important to have not only photosensitive elements of equal height but also a linear surface of the common substrate where these elements are fixed. This surface may also have geometrical imperfections. As a result the elements fixed on the substrate even having equal thickness may disturb flatness of the sensor array. With the through holes performed on the common substrate and filled with adhesive the available surface imperfections of the common substrate can be compensated by means of adhesive quantity injected and keep flatness of the sensor array surface.

In order to achieve assigned task considering the said technical result there was developed a method of photosensitive element production for the x-ray imaging detector characterized by performing photosensitive element assembly comprising a photosensitive plate and a substrate wherein an elastically deformed interlayer is arranged and fixed between the said photosensitive plate and the substrate wherein the interlayer is fixed by means of adhesive. Then the obtained workpiece of photosensitive element is formed in the calibration device comprising an easy-to-remove assembly for setting the given element thickness. Wherein using the said assembly the photosensitive plate is centered against the substrate, and being under pressure the workpiece remains in the calibration device until the adhesive has set.

In order to achieve assigned task considering the said technical result there was developed a method of an x-ray imaging detector manufacturing that involves formation of photosensitive sensor array where each photosensitive element comprising a photosensitive plate and a substrate are arranged on the common substrate. Before the sensor array formation procedure an elastically deformed interlayer is placed between the photosensitive plate and appropriate substrate and fixed with adhesive. Then, the obtained in a said manner workpiece of photosensitive element is formed in the calibration device comprising an easy-to-remove assembly for setting the given element thickness, alignment and flatness of the photosensitive plate and the substrate. Further out of height-calibrated photosensitive elements a workpiece of photosensitive element is formed in the sensor array calibration device that by using pressure provides flatness of the photosensitive sensor array surface wherein the photosensitive sensor array is mounted on the common substrate by means of fastening performed on the said substrate.

In addition to method of photosensitive element and detector manufacturing:
- elastically deformed interlayer made out of brass, copper or preferably steel micron-scale wire mesh wherein wire mesh dimensions are equal to those of a photosensitive element;
- calibration device comprises for example two vacuum plates providing vertical axial movement of being coupled both photosensitive plate and substrate and their vertical-horizontal centering relative to each other wherein an easy-to-remove assembly for setting the given element thickness is placed between them;
- an easy-to-remove assembly of the calibration device is performed as a cored circular cylinder of a reference height that defines the element's thickness wherein on the inner surface of the assembly there are centering supports that are placed on appropriate height of the an easy-to-remove assembly, which is determined by geometry of the photosensitive plate and substrate as well as by assembly succession.

In addition to method of detector manufacturing:
- sensor array calibration device is performed as a vacuum plate;
- fastening tool is performed as an opening filled at least partly with adhesive.

### Detailed description of the invention

The said preferred features as well as peculiarities of the present invention are presented with the best embodiment variant with reference to the following figures:
Fig.1 shows an overall schematic view of the x-ray imaging detector (simplified);
Fig. 2 shows a photosensitive element of the sensor array performed according to the said method, claim 5.

The method of manufacturing photosensitive element for the x-ray imaging detector is explained with figures showing photosensitive element during method procedures implementation:
Fig. 3 shows initial position of the substrate, photosensitive plate and elastically deformed interlayer before setting into calibration device, vertical longitudinal section;
Fig. 4 shows formation procedure of the photosensitive element in the calibration device: longitudinal section, upper and lower part of the calibration device is separated;
Fig. 5 shows a photosensitive element set in the calibration device.
Fig. 6 and 7 show (simplified) the detector performed according to the said method, claim 9; vertical longitudinal section.

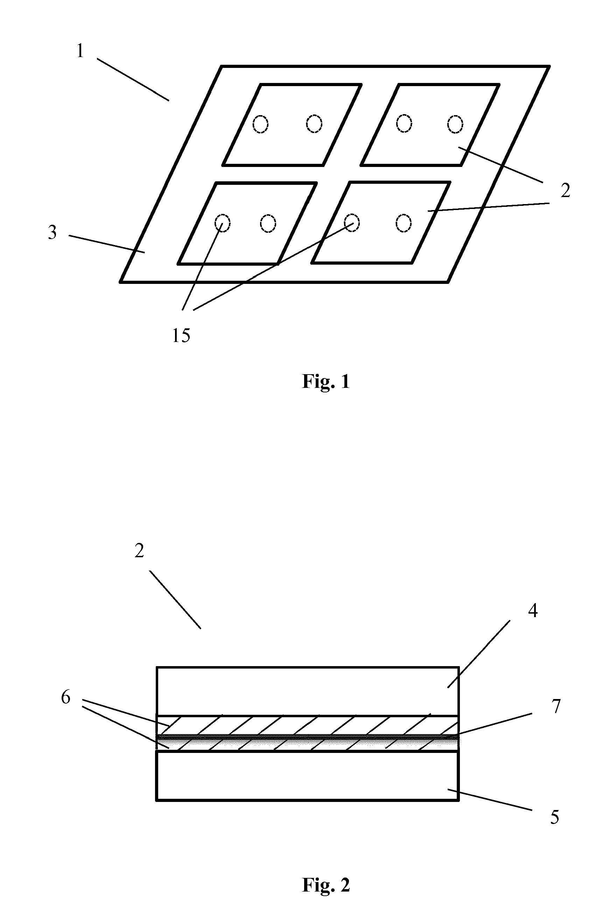

There are the following positions in Fig. 1 - 7:
1 - x-ray imaging detector;
2 - photosensitive element;
3 - common substrate;
4 - photosensitive plate of the element 2;
4a - active side of the photosensitive plate 4;
4b - back side of the photosensitive plate 4;
5 - semiconducting substrate of the photosensitive element 2;
6 - adhesive;
7 - elastically deformed interlayer;
8 - calibration device;
9 - first vacuum plate;
10 - second vacuum plate;
11 - easy-to-remove assembly for setting the thickness of the photosensitive element 4;
12 - vacuum fitting;
13 - vacuum plate;
14 - opening to fasten element 2;
15 - adhesive to fasten element 2.

### The preferred embodiment of the invention

The x-ray imaging detector 1 (Fig. 1) is a multilayer structure involving a sensor array consisting of photosensitive elements 2 arranged on the common substrate 3 which can be performed out of silumin (CE7). Elements 2 are aligned in one surface in the immediate vicinity of each other forming a photosensitive surface. Fig.1 shows one of the possible schemes to a form a sensor array with 2x2 photosensitive elements arrangement. There can be formed MxN sensor arrays where M, N≥ 1.

According to the claimed invention Fig. 2 schematically shows a photosensitive element 2, that similar to the detector has a multilayer structure being in reality an assemblage comprising substrate 5, performed for example out of silumin (CE7), and photosensitive plate 4 made out of silicon (Si). Between the photosensitive plate 4 and appropriate substrate 5 there is and fixed with adhesive 6 an elastically deformed interlayer 7 that can be performed as micron-scale wire mesh (stainless steel), where the wire diameter is 40 micron (µm).

As adhesive 6 can be used for example Thermopox 85CT. Limit deviation tolerance value for parallelism in photosensitive element 2 is at least 3 µm.

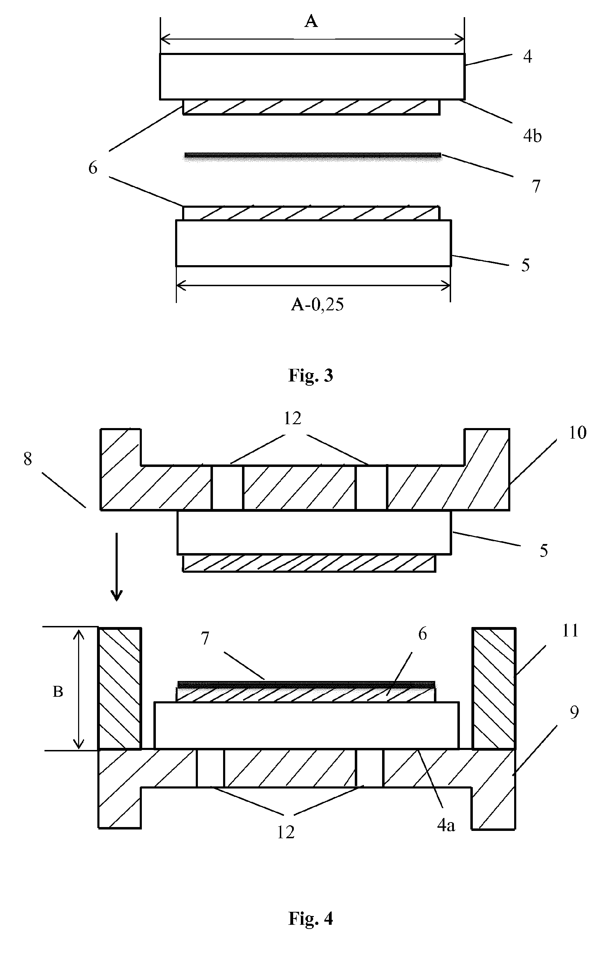

Fig.3, 4, 5 schematically shows a photosensitive element 2 during its production procedure:

Fig. 3 shows a preparation scheme of photosensitive plate 4 and substrate 5 of the photosensitive element 2, when the inner substrate surface 5 and back side 4b of the plate 4 are covered with Thermopox 85CT adhesive layer 6 of high thermal conductivity and deionization of sensor array element 2. Adhesive 6 is spread over the inner substrate surface and back side of the plate using the known methods (for example, with the use of serigraphy);

Fig. 4 shows the formation process of the photosensitive element workpiece 2 in the calibration device 8. Calibration device consists of the first 9 and second 10 vacuum plates, providing vertical axial movement of being coupled both photosensitive plate 4 and substrate 5 and their vertical-horizontal centering relative to each other.

Wherein an easy-to-remove assembly 11 for setting the thickness of the element 2 is placed between the vacuum plates. The easy-to-remove assembly 11 is performed as a cored circular cylinder of a reference height B. The height B being a reference value is equal to a nominal thickness of a real photosensitive element including thickness limit deviation tolerance, stated in specification for the given element. This value for this type of photosensitive element is 5 ± 0,003 µm;

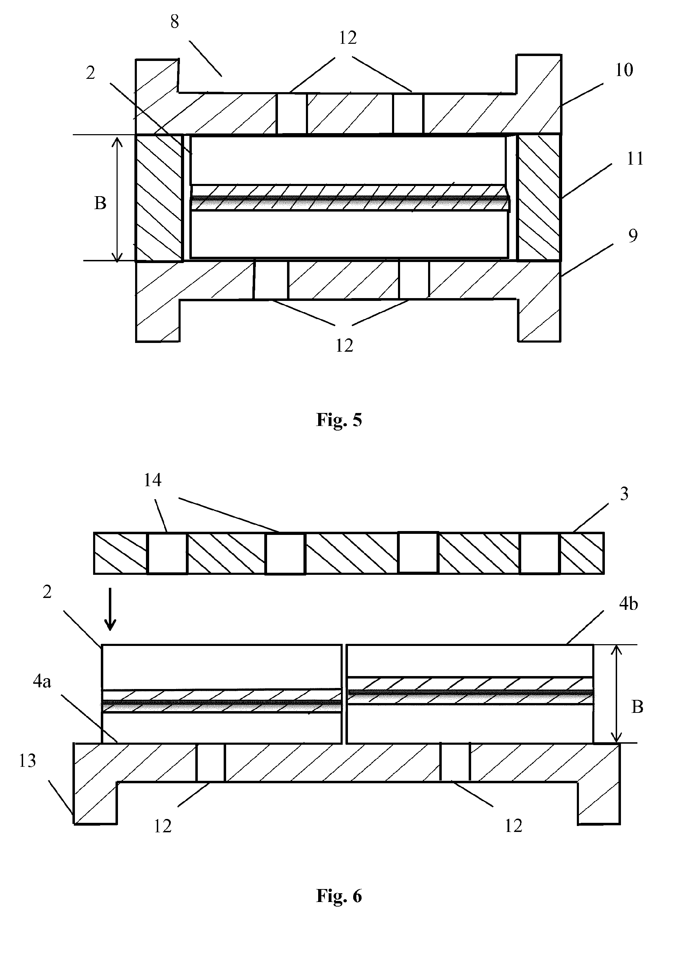

Fig. 5 shows photosensitive element 2 performed according to the invention and assembled with the use of calibration device 8. Fig. 4 - 5 show calibration device 8 comprising first 9 and second 10 vacuum plates having vacuum openings 12 aimed to fix photosensitive plate 4 and substrate 5, appropriately. Vacuum plate surfaces 9 - 10 and adjoined base surfaces of easy-to-remove assembly 11 have the most considerable flatness deviation tolerance value of 1 µm.

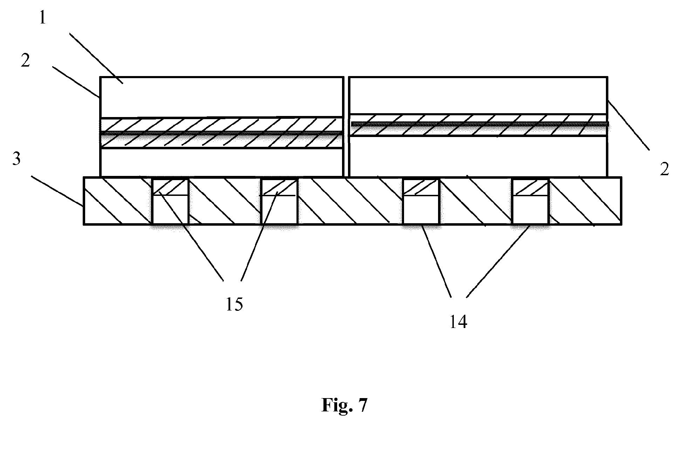

Figs. 6 and 7 schematically show the x-ray imaging detector performance procedure. Each photosensitive element 2 is set with its active side 4a on the sensor array calibration device performed as a vacuum plate 13 having openings 12 aimed to fix sensor array elements. On the generated sensor array is set substrate 3 having openings 14 aimed to fix elements 2 with adhesive 15.

The x-ray imaging detector is performed as follows.

Fig. 3 shows generation of photosensitive element workpiece 2. The photosensitive plate 4 having on its backside 4b adhesive layer 6 is set with its active side 4a on the surface of the first vacuum plate 9. The vacuum plate 9 fixes the plate 4 using vacuum openings 12. An elastically deformed interlayer 7 performed of micron-scale wire mesh is set on an adhesive layer 6. The vacuum plate 10 using vacuum opening 12 fixes the plate 5 the inner side of which is covered with an adhesive layer 6. The thickness of the adhesive layer spread over substrate and plate surfaces is no more than 50 µm. Due to pressure difference the silicon plate 4 and silumin substrate 5 are fixed fast solidly and safe in the vacuum plates. Vacuum plates utilization provides avoiding undesirable bowings and other deformities of surface being in touch with them.

Further, the easy-to-remove assembly 11 (Fig. 4) performed as a cored circular cylinder is put on the vacuum plate 9 wherein plate 4 shall be put within its cavity.

The easy-to-remove assembly 11 having a reference height B equal to a nominal thickness of a real photosensitive element performs two functions: 1) it serves for centering and fixing plate and substrate in relation to each other so that the plate and substrate could be fixed in the given position and at the given distance from each other. It could be implemented for example, by means of centering supports (is not shown), that are placed on appropriate height of the an easy-to-remove assembly, which is determined by geometry of the photosensitive plate and substrate; 2) easy-to-remove assembly 11 having reference height B specifies the same thickness for each workpiece and thus, photosensitive elements of equal height (equal thickness) are generated.

Further, the second vacuum plate 10 with the fixed on it substrate 5 is moved vertically down until surfaces of the vacuum plate 10 of the second cylinder base 11 have united. Flatness tolerance of the adjoined surfaces of the vacuum plates 9 - 10 with that of cylinder base 11 is 1 µm.

In the photosensitive element workpiece being in set and fixed position (Fig. 5), during formation stage the distance between the photosensitive plate 4 and substrate 5 remains constant wherein the wire mesh 7 between them is deformed providing additional elastic repulsion of the plate from the substrate. Thin easy-deformed wire mesh fits closely to silicon plate and substrate surfaces providing compensation of possible imperfections of adjoined surfaces. The wire mesh deformation is accompanied with adhesive redistribution 6 in the space between the plate and substrate surfaces in lengthwise and lateral directions. The wire mesh provides more solid fixation of workpiece elements in relation to each other and besides, decreasing air bubbles number and size that results in improving adhesive layer homogeneity between the photosensitive plate and substrate.

After the procedure of the workpiece generating and exposure in the calibration device 8, Si-plate and silumin-based substrate turned to be solidly fixed to each other thus, an assembly unit consisting of plate 4, substrate 5 and micron-scale wire mesh 7 being inside the adhesive layer 6. Photosensitive elements have the same thickness B, equal to a reference height of a hollow cylinder (5±0,003 µm).

Further, the detector sensor array is generated (Figs. 4 - 5). For that on the vacuum plate 13 photosensitive elements 2 of the equal thickness produced independently from each other are arranged facing by their active side 4a the transparent surface Using microscopes (not shown) pixel-by-pixel element smoothing is conducted then evacuation procedure through openings 12 results in elements pressing to vacuum plate 13. Then the common substrate 3 with ready-made openings 14 is put on thus formed sensor array. Wherein the number of openings for each photosensitive element should be equal at least to two. The openings are filled partly or in full with adhesive 15, (for example, MIL-A48611(MU)"MILBOND"). According to the present invention each element 2 is independently fixed to the substrate, contrary to the variant when all elements are glued to the common adhesive layer. As a result this method of fixing elements 2 to the substrate 3 provides replacement of failed elements without disturbances of sensor array integrity and photosensitive surface flatness. To replace an element the adhesive 15 should be drilled out from the openings 14.

According to the claimed method a production prototype of a 3x2 array-based x-ray imaging detector was produced. Each photosensitive element is manufactured in accordance to the said method. The silicon plate size that determines the size of a photosensitive element is 8 inches. Each photosensitive element thickness is 5 mm wherein the highest flatness deviation tolerance of the active plate side is 0,0025 mm. Within a photosensitive element parallelism deviation of the silicon plate and the substrate is 0,003 mm, and flatness deviation of the whole sensor array surface formed from such photosensitive elements is 0, 005 mm.

Therefore, the claimed solution provides a high flatness grade of photosensitive sensor array surface, since its generation is performed out of photosensitive elements of the same thickness. Each photosensitive element is a geometrically unified assembly unit that is successively set on the common substrate, fixed on it and, thus form a sensor array having a high flatness grade of the surface. A considerable efficient production process that provides a possibility of photosensitive elements interchangeability without disturbances of sensor array integrity and photosensitive surface flatness because instead of failed element a new one with the same geometrical parameters could be set is used to implement the said method and device.

### Industrial applicability

The Information about the claimed solution presented in the independent patent claims indicates a possibility of its implementation by means of described in the application and known tools and methods. Therefore, the claimed device and method satisfy industrial applicability criteria.

The offered technical solution is disclosed in the description accompanied with its applicability examples that are to be considered device and method illustrations but not their limit. Specialists in this art could suggest other description-based variants in the scope of the present patent claim.

## Claims

1. An x-ray imaging detector is **characterized by** comprising a photosensitive sensor array mounted on the common substrate on which each photosensitive element of the said sensor array includes a photosensitive plate and a substrate and elastically deformed interlayer that is arranged and glue-based fixed between them wherein the interlayer provides a given thickness of the photosensitive element and formation of high degree flatness photosensitive surface, wherein each photosensitive element is mounted on the common substrate with the possibility to be replaced without disturbances of the said photosensitive surface flatness by means of fastening performed on the common substrate.

2. The x-ray imaging detector of claim 1, wherein the elastically deformed interlayer is a micron-scale wire mesh made out for example, of brass, copper or steel, preferred material is stainless steel, wherein the wire mesh dimensions are equal to those of a photosensitive element.

3. The x-ray imaging detector of claim 1, wherein, the preliminary determined thickness of photosensitive element is provided by placing the element in a calibration device, comprising an easy-to-remove assembly for setting the given element thickness, wherein, the easy-to-remove assembly is performed for example as a cored circular cylinder of a reference height that defines the said element thickness.

4. The x-ray imaging detector of claim 1 wherein, a fastening tool is performed as an opening filled at least partly with adhesive.

5. A method for manufacturing detector photosensitive element is **characterized by** performing photosensitive element assembly comprising a photosensitive plate and a substrate wherein an elastically deformed interlayer is arranged and fixed between the said photosensitive plate and the substrate wherein the interlayer is fixed by means of adhesive; by generating thus obtained a photosensitive element workpiece and putting it into a calibration device comprising an easy-to-remove assembly to provide a given thickness of the photosensitive element wherein using the said device the photosensitive plate is centered in relation to the substrate and being under pressure the workpiece remains in the calibration device until the adhesive has set.

6. The method for manufacturing photosensitive element of claim 5, in which the interlayer is performed as a micron-scale wire mesh made out for example, of brass, copper or steel wire wherein the preferred material is stainless steel, wherein the wire mesh dimensions are equal to those of a photosensitive element.

7. The method of claim 5, in which the calibration device is performed for example as two vacuum plates providing vertical axial movement, of being coupled both photosensitive plate and substrate and their vertical-horizontal centering relative to each other wherein an easy-to-remove assembly for setting the given element thickness is placed between them.

8. The method of claim 5 or 7, in which the easy-to-remove assembly is performed as a cored circular cylinder of a reference height equal to the element thickness wherein on the inner surface of the assembly there are centering supports that are placed on appropriate height of the easy-to-remove assembly, which is determined by geometry of the photosensitive plate and substrate as well as by assembly succession.

9. The method for manufacturing the x-ray imaging detector is **characterized by** performing a photosensitive sensor array having photosensitive elements that comprise a photosensitive plate and a substrate, wherein the said sensor array is mounted on the common substrate, wherein before sensor array generating an elastically deformed interlayer is arranged and fixed between the said photosensitive plate and the substrate wherein the interlayer is fixed by means of adhesive, by generating thus obtained a photosensitive element workpiece and putting it into a calibration device comprising an easy-to-remove assembly to provide a given thickness of the photosensitive element, as well as alignment and flatness of the photosensitive plate and the substrate; by generating out of calibrated elements a sensor array by putting them into sensor array calibration device creating then pressure force providing thus flatness of the photosensitive sensor array surface wherein elements assemblage on the common substrate is performed by means of fastening generated on the same substrate.

10. The method for manufacturing the x-ray imaging detector of claim 9 in which the interlayer is performed as a micron-scale wire mesh made out for example, of brass, copper or steel wire wherein the preferred material is stainless steel, wherein the wire mesh dimensions are equal to those of a photosensitive element.

11. The method of claim 9 in which the calibration device is performed for example as two vacuum plates providing vertical axial movement, of being coupled both the photosensitive plate and substrate and their vertical-horizontal centering relative to each other wherein an easy-to-remove assembly for setting the given element thickness is placed between them.

12. The method of claim 9 or 11, in which the easy-to-remove assembly is performed as a cored circular cylinder of a reference height equal to the element thickness wherein on the inner surface of the assembly there are centering supports that are placed on appropriate height of the easy-to-remove assembly, which is determined by geometry of the photosensitive plate and substrate as well as by assembly succession.

13. The method for manufacturing the detector of claim 9 in which the sensor array calibration device is performed as a vacuum plate.

14. The method for manufacturing the detector of claim 9 a fastening tool is performed as an opening filled at least partly with adhesive.
